# EUROPEAN PATENT SPECIFICATION

(11) **EP 1 134 950 B1**
(45) Date of publication and mention of the grant of the patent: **30.08.2006**
(21) Application number: 01302295.9
(22) Date of filing: 13.03.2001
(51) Int. Cl.: H04L 29/06, H04L 29/08, H04L 12/56, H04L 12/18

(54) **Improvements to control system for network servers**
Verbesserung von Regelungsystem für Netzbetreibern
Améloriation du système de controle pour serveurs de réseau

(30) Priority: 15.03.2000 GB 0006096
(43) Date of publication of application: 19.09.2001
(73) Proprietor: Pace Micro Technology PLC, Saltaire, Shipley, BD18 3LF (GB)
(72) Inventor: Brodie, Stewart, Saltaire, Shipley BD18 3LF (GB); Bracey, Kevin, Saltaire, Shipley BD18 3LF (GB)
(74) Representative: Wood, Graham

(56) References cited:
- EMBERSON A: "RFC 2090; TFTP Multicast Option" IETF - INTERNET ENGINEERING TASK FORCE, February 1997 (1997-02), XP002249823
- NARAYAN A P: "Reliable transfer of data in a local area network with multicast distribution" LOCAL COMPUTER NETWORKS, 1990. PROCEEDINGS., 15TH CONFERENCE ON MINNEAPOLIS, MN, USA 30 SEPT.-3 OCT. 1990, LOS ALAMITOS, CA, USA,IEEE COMPUT. SOC, US, 30 September 1990 (1990-09-30), pages 310-319, XP010022012 ISBN: 0-8186-2109-5
- DELUCIA D ET AL: "Multicast feedback suppression using representatives" INFOCOM '97. SIXTEENTH ANNUAL JOINT CONFERENCE OF THE IEEE COMPUTER AND COMMUNICATIONS SOCIETIES. DRIVING THE INFORMATION REVOLUTION., PROCEEDINGS IEEE KOBE, JAPAN 7-11 APRIL 1997, LOS ALAMITOS, CA, USA,IEEE COMPUT. SOC, US, 7 April 1997 (1997-04-07), pages 463-470, XP010252039 ISBN: 0-8186-7780-5

## Description

The invention to which this application relates is to improvements in the operation of a server known as a multicast Trivial File Transfer Protocol (TFTP) server which is provided in connection with a network of client apparatus. The server is provided to transmit and transfer data to the client apparatus.

The use of TFTP servers is relatively well known and one area in which the same is used is to provide information to a communications network which includes a number of client apparatus in the form of broadcast data receivers. This form of apparatus is provided in premises in increasing numbers and includes a means for receiving digital data which has been transmitted from a remote location such as by a television broadcaster and carried via any of cable, satellite or terrestrial transmission systems. When received the broadcast data receivers, decode the data and process the same to allow the generation of video, audio and/or text data for display, typically via a television set. The broadcast data receiving apparatus can be connected to the television set or may be provided as an integral part of the same. Each of the broadcast data receiver is provided with further communication means which allow the transfer of data to and from the same, and are provided as part of a networking communication with the TFTP server which can provide updated images or information data at intervals to all of the receivers on the network.

There are however known problems with this type of system as follows. One problem is that when multiple receivers, hereinafter referred to as clients, are required to receive the data from TFTP server, one of the clients is identified as the master client by the server. The speed of data transfer is then controlled by the speed at which the master client requests, receives and acknowledges receipt of the data and the other clients in the network will then receive the data in accordance with the transfer speed between the master client and the server. This means that if the master client is slow in requesting the data, for whatever reason, then the other clients will also be adversely affected by the decreased transfer speed in terms of the time taken for the data to be transferred to the client apparatus.

The document EMBERSON A: RFC 2090 TFTP Multicast Option - IETF February 1997 XPOO 2249823 and NARAYAN AP: Reliable transfer of data in a local area network with multicast distribution, LOCAL COMPUTER NETWORKS 1990, PROCEEDINGS 15^{TH} CONFERENCE ON MINNEAPOLIS, XP01002012 ISBN: 0-8186-2109-5 both address this problem by referring to the Acknowledgements received from the master client as a means of acting as a monitoring function and indication of the performance of the master client. However these acknowledgements are not monitored in terms of time to receive the same but rather in terms of an indication of a degree of error in the reception of the transmitted packets of data to indicate the successful or otherwise, reception of the transmitted data by the master client.

A further problem is that if a client apparatus which is part of the network is rendered inactive and then restarted such as, for example, if the client is rebooted, interrupted or crashes, during the transfer of data from the TFTP server and it is not the master client, there is a possibility that there will be a period of time during which the server will attempt to inform the said client that it is now the master client. Although the server may have a predesignated time out period after which it will cease to attempt to make the client the master client, there is inevitably a delay during which none of the clients involved in the transfer of data can progress.

The aims of the present invention are to provide improvements to the TFTP network and the operation of the same which allow for the more efficient and faster transfer of data where possible and also attempt to avoid unnecessary delays in the transfer of data.

In a first aspect of the invention there is provided a method of controlling a multicast data transfer network comprising a TFTP server connected to a series of client apparatus connected to the network, and when data is to be transferred from the server to the client apparatus the method includes the steps of designating one of the clients as a master client whereby the rate of data transfer is determined by the speed at which the master client requests, receives and acknowledges receipt of the data, characterised in that the rate of data transfer to the elected master client is monitored and compared with a predetermined rate of data transfer and if, from the comparison, it is identified that the monitored rate of data transfer is slower than the predetermined rate of data transfer, the TFTP server elects another client apparatus which is available, as master client.

By electing the client as master client which has shown the fastest rate of transfer, so the server can ensure that the data which flows to all of the clients in the network will do so at the fastest possible rate.

In one embodiment the predetermined transfer rate is preset as an optimal time for the transfer of a certain amount of data and the master client is monitored for a set period of time.

In an alternative embodiment the transfer rate for each of the clients, when elected as master client, is recorded over a period of time and a database constructed of the transfer rates for each client and from which database the server will attempt on each occasion to elect as master client that client which shows the fastest transfer rate and in ascending order until an available client is found. Typically this database can be updated on each occasion when a client is selected as master client.

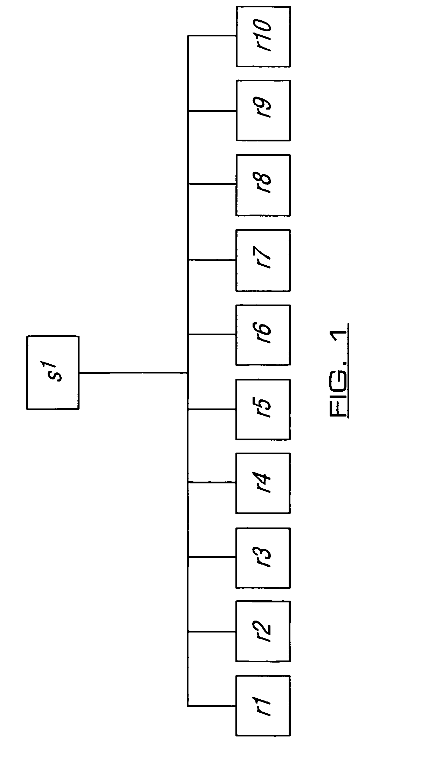

Specific embodiments of the invention will now be described with reference to the accompanying diagram, Figure 1, which illustrates in schematic fashion an embodiment of server and client network to which this invention relates. Although referred to hereonin as "clients" the invention has particular uses with respect to a network comprising a server which allows the transmission of data for updating, changing or otherwise amending the operation of a series of clients in the form of broadcast data receivers connected to a network and hence in turn to the server. Typically each broadcast data receiver is located in a different premises of a subscriber to a television system and the server is controlled and operated by the service provider and the data is transferred via a communications link to which each of the broadcast data receivers is connected.

In the first embodiment, the TFTP server protocol (RFC1350, RFC2090) used for the system is a lock step protocol. The data which is transmitted by the server is transmitted at a rate which is as fast as the client which has been elected the master client acknowledges receipt of data and then requests the transfer of the next block or packets of data. The master client needs to process incoming data blocks and send its request for the next block as fast as possible in order to sustain a high data transfer speed. The rest of the clients act as slaves, simply accepting data transmitted via the network as it arrives, without the need to request further data. Thus if the master client is slow in any part of the data transfer procedure, or the network is losing packets and the server is required to retransmit data blocks, then all of the other clients suffer from the slowing down of the transfer too.

In accordance with the invention, if the server monitors the data transfer rate over a reasonable sample period such as 5 seconds and determines, either through configuration or knowledge of the network topology, that the rate is less than a predetermined data transfer rate, it deposes the master client and elects a new client as master client.

Thus, the newly elected master client is then checked against the predetermined data transfer rate and if it is acceptable and hence able to receive and respond to the data packets in a faster manner, the data transfer speed is quicker to all of the clients in the network.

It may also be the case that the previous master client which was too slow is now capable of receiving the data at the same speed as the other clients as the previous problems of lack of speed was caused by its inability to transmit the acknowledgements quickly enough and/or request new data quickly enough. As it no longer needs to do this as it is no longer the master client so the actual receipt of the data can be at the increased speed.

A specific example is now provided with reference to the accompanying diagram. A TFTP server s1 is connected to a network of clients r1-r10, such as broadcast data receivers, each receiver located in a different premises and connected to the server which is located at a remote location, via a communications link, such as a telecommunications link.

The server s1 is configured to select one of the clients as a master client with the master client communicating with the server to acknowledge the receipt of data and request the next portion of data. The remainder of the clients then act as slaves to the master client, receiving the data at the speed set by the transfer speed between the master client and the server.

The server is set to check the data transfer rate with the master client at certain time periods, say 5 seconds, and compare the actual data transfer rate with a required predetermined rate of 50 kilobytes per second.

In accordance with this embodiment, the ten broadcast data receivers r1-r10 download data for an Operating System (OS) image over the network concurrently, by using the multicast TFTP server. In practice the Client r1 supports a slower data transfer rate machine than clients r2-r10. However initially the server elects client r1 as the master client and upon commencement a data transfer rate of only 40 kilobytes per second is being achieved. After 5 seconds the server checks the data transfer rate, compares the same with the predetermined transfer rate of 50 kilobytes per second and determines that client r1 is too slow. It then stops r1 from continuing as the master client and elects client r2 in preference. Client r2 can sustain a data speed of 60 kilobytes per second which exceeds the predetermined data transfer speed and so r2 continues as the master client and thereafter all the other clients continue to receive data at the faster rate, and which may include client r1.

In one embodiment the server can be provided with a memory wherein if a client which is elected as a master client cannot meet the predetermined data transfer rate, either for the first time or after a number of attempts, the identity of that client is held in memory and thereafter the server does not attempt to elect that client as a master client until it is removed from the memory, if for example, the same is fixed. Furthermore if a certain proportion of clients identities are found to be held in the memory over time, this will indicate that the network may fail as there are no longer sufficient clients available to meet the criteria of the predetermined data transfer rate and so repair work may be required on the network.

In a further embodiment the transfer rate for each of the clients, when elected as master client, is recorded and stored in the server memory and, when the need to elect a master client arises, the server attempts to elect as master client the client which has a transfer rate, in accordance with the data held in the memory, which has the fastest of transfer. Typically, if the first client which the server attempts to use as master client is not available, the server attempts to elect a further client from the database and so on in ascending order in terms of the client data transfer rates. Typically when a client has been elected, the data transfer rate for the selected data transfer by that client is entered on the database. In one embodiment the data transfer rate which is used can be the last transfer rate or alternatively an average transfer rate can be used.

An example of a further improvement of the invention is now described. In this example, the TFTP server s1 is transmitting a TFTP datagram to a specific client (e.g. to inform it has been selected as master client). If the TFTP software for that client is no longer running then the network software on the client will send back an ICMP Port Unreachable message to the server.

However usually the network memory on the server does not know to which socket the message should be delivered and so the server software is unaware that the error has occurred.

However in accordance with the invention, the server monitors the ICMP messages received from the clients and processes the same so as to identify that the TFTP software of a client has failed and that there is no point in continuing to try and elect that client as master client. Thus the server will ignore that client and elect another client without undue delay to the data transfer. This can continue until a message is received from the client to indicate that it has been fixed and is then operable again.

A specific example of this is now described with reference to the accompanying diagram with the 10 broadcast data receivers r1-r10 connected to the TFTP server s1. In this case r2 has been elected as the master client. However during data transfer the TFTP client r3 fails before client r2 has completed the data transfer.

Once client r2 has completed the transfer, the TFTP server detects that r3 has not received the data and tries to elect client r3 as master client however the server receives an ICMP port unreachable message for client r3. Thus when the next need to elect a master client arises, the server ignores r3 and immediately moves on to elect client r4. Conventionally the server would have delayed for a number of seconds as it waited to give client r3 a chance to respond thus holding up the transfer of data for all the other clients.

Thus the present invention provides a system for the control the network which improves the data transfer rate throughout the network and overcomes unnecessary delays.

## Claims

1. A method of controlling a multicast data transfer network comprising a TFTP server (s1) connected to a series of client apparatus (r1-r10) connected to the network, and when data is to be transferred from the server to the client apparatus the method includes the steps of designating one of the clients as a master client whereby the rate of data transfer is determined by the speed at which the master client requests, receives and acknowledges receipt of the data, **characterised in that** the rate of data transfer to the elected master client is monitored and compared with a predetermined rate of data transfer and if, from the comparison, it is identified that the monitored rate of data transfer is slower than the predetermined rate of data transfer, the TFTP server (s1) elects another client apparatus (r1-r10) which is available, as master client.

2. A method of controlling the data transfer network according to claim 1 **characterised in that** the TFTP server elects a client as master client which has shown the fastest rate of data transfer from the series of clients.

3. A method of controlling a data transfer network according to claim 1 **characterised in that** the predetermined rate of data transfer is preset as the speed for the sending of a certain amount of data.

4. A method of controlling a data transfer network according to claim 1 **characterised in that** the master client is monitored for a set period of time to allow comparison with the predetermined rate of data transfer.

5. A method of controlling a data transfer network according to claim 1 **characterised in that** the rate of data transfer for each of the clients, when elected as master client, is recorded over a period of time and stored in a database of rates of data transfers, the server using the database so that on each occasion the server elects as master client the client which shows the fastest rate of data transfer in the database.

6. A method of controlling a data transfer network according to claim 5 **characterised in that** if the first client which the server attempts to use as master client is not available, the server attempts to elect a client from the database based on a descending order of client rates of data transfer.

7. A method of controlling a data transfer network according to claim 5 **characterised in that** the database is updated on each occasion when a client is selected as master client.

## Patentansprüche

1. Verfahren zum Steuern eines Multicast-Datenübertragungsnetzwerks, das einen TFTP-Server (s1) umfasst, der mit einer Reihe von am Netzwerk angeschlossenen Client-Geräten (r1-r10) verbunden ist, und wenn Daten vom Server zu den Client-Geräten übertragen werden sollen, dann beinhaltet das Verfahren die folgenden Schritte: Designieren eines der Clients als Master-Client, so dass die Datenübertragungsrate anhand der Geschwindigkeit bestimmt wird, mit der der Master-Client Daten anfordert, empfängt und deren Empfang bestätigt, **dadurch gekennzeichnet, dass** die Datenübertragungsrate zum gewählten Master-Client überwacht und mit einer vorbestimmten Datenübertragungsrate verglichen wird, und wenn anhand des Vergleichs erkannt wird, dass die überwachte Datenübertragungsrate geringer ist als die vorbestimmte Datenübertragungsrate, der TFTP-Server (s1) ein anderes verfügbares Client-Gerät (r1-r10) als Master-Client wählt.

2. Verfahren zum Steuern des Datenübertragungsnetzes nach Anspruch 1, **dadurch gekennzeichnet, dass** der TFTP-Server einen Client als Master-Client wählt, der in der Reihe von Clients die schnellste Datenübertragungsrate gezeigt hat.

3. Verfahren zum Steuern eines Datenübertragungsnetzes nach Anspruch 1, **dadurch gekennzeichnet, dass** die vorbestimmte Datenübertragungsrate als die Geschwindigkeit zum Senden einer bestimmten Datenmenge voreingestellt wird.

4. Verfahren zum Steuern eines Datenübertragungsnetzes nach Anspruch 1, **dadurch gekennzeichnet, dass** der Master-Client für eine bestimmte Zeitperiode überwacht wird, um einen Vergleich mit der vorbestimmten Datenübertragungsrate zu ermöglichen.

5. Verfahren zum Steuern eines Datenübertragungsnetzes nach Anspruch 1, **dadurch gekennzeichnet, dass** die Datenübertragungsrate für jeden der Clients, wenn er als Master-Client gewählt ist, über eine Zeitperiode aufgezeichnet und in einer Datenbank von Datenübertragungsraten gespeichert wird, wobei der Server die Datenbank so verwendet, dass bei jeder Gelegenheit der Server den Client als Master-Client wählt, der die schnellste Datenübertragungsrate in der Datenbank zeigt.

6. Verfahren zum Steuern eines Datenübertragungsnetzes nach Anspruch 5, **dadurch gekennzeichnet, dass** der Server, wenn der erste Client, den der Server als Master-Client zu benutzen versucht, nicht zur Verfiigung steht, versucht, einen Client aus der Datenbank auf der Basis einer absteigenden Reihenfolge von Client-Datenübertragungsraten zu wählen.

7. Verfahren zum Steuern eines Datenübertragungsnetzes nach Anspruch 5, **dadurch gekennzeichnet, dass** die Datenbank bei jeder Gelegenheit aktualisiert wird, wenn ein Client als Master-Client gewählt wird.

## Revendications

1. Procédé de contrôle d'un réseau de transfert de données à diffusion multiple lequel comprend un serveur TFTP (s1) qui est connecté à une série d'appareils clients (r1-r10) connectés sur le réseau, et lorsque des données sont destinées à être transférées à partir du serveur vers l'appareil client, le procédé inclut les étapes consistant à désigner l'un des clients comme le client-maître, cas dans lequel le débit de transfert des données est déterminé par la vitesse à laquelle le client-maître demande, reçoit et accuse réception des données, **caractérisé en ce que** le débit de transfert des données vers le client-maître est surveillé et est comparé à un débit de transfert de données prédéterminé et si, après l'opération de comparaison, il s'avère que le débit de transfert de données surveillé est inférieur au débit de transfert de données prédéterminé, alors le serveur TFTP (s1) choisit un autre appareil client (r1-r10) (qui est disponible) en tant que client-maître.

2. Procédé de contrôle du réseau de transfert de données, selon la revendication 1, **caractérisé en ce que** le serveur TFTP choisit comme client-maître le client qui s'est révélé avoir le débit de transfert de données le plus rapide parmi la série de clients.

3. Procédé de contrôle d'un réseau de transfert de données, selon la revendication 1, **caractérisé en ce que** le débit de transfert de données prédéterminé est réglé à l'avance comme étant la vitesse utilisée pour l'envoi d'une certaine quantité de données.

4. Procédé de contrôle d'un réseau de transfert de données, selon la revendication 1, **caractérisé en ce que** le client-maître fait l'objet d'une surveillance pendant un intervalle de temps défini afin de permettre une comparaison avec le débit de transfert de données prédéterminé.

5. Procédé de contrôle d'un réseau de transfert de données, selon la revendication 1, **caractérisé en ce que** le débit de transfert de données pour chacun des clients, une fois que ce client a été sélectionné comme le client-maître, est enregistré pendant un certain intervalle de temps et est stocké dans une base de données des débits de transfert de données, le serveur utilisant la base de données de sorte qu'à chaque occasion, le serveur choisit en tant que client-maître le client qui offre le débit de transfert de données le plus rapide dans la base de données.

6. Procédé de contrôle d'un réseau de transfert de données, selon la revendication 5, **caractérisé en ce que** si le premier client, que le serveur tente d'utiliser en tant que client-maître, n'est pas disponible, le serveur va tenter de choisir un client à partir de la base de données en fonction d'un ordre descendant des débits de transfert de données des clients.

7. Procédé de contrôle d'un réseau de transfert de données, selon la revendication 5, **caractérisé en ce que** la base de données est mise à jour à chaque occasion qu'un client est sélectionné en tant que client-maître.
